# EUROPÄISCHE PATENTSCHRIFT

(11) **EP 3 988 890 B1**
(45) Veröffentlichungstag und Bekanntmachung des Hinweises auf die Patenterteilung: **13.08.2025**
(21) Anmeldenummer: 21201673.7
(22) Anmeldetag: 08.10.2021
(51) Int. Cl.: F41F 3/055, F42B 15/04, B65H 75/10, F41F 3/07, F42B 15/20, G02B 6/44

(54) **SPULENKÖRPER MIT MITTELN ZUR DURCHFEUCHTUNG EINES WICKELPAKETS**
BOBBIN WITH MEANS FOR WETTING A WINDING PACKAGE
CORPS DE BOBINE POURVU DE MOYENS DE MOUILLAGE D'UN PAQUET D'ENROULEMENT

(30) Priorität: 21.10.2020 DE 102020006470
(43) Veröffentlichungstag der Anmeldung: 27.04.2022
(73) Patentinhaber: Diehl Defence GmbH & Co. KG, 88662 ÜBERLINGEN (DE)
(72) Erfinder: Trapp, Sascha, 88682 Salem (DE); Bohacek, Radomir, 88662 Überlingen (DE)
(74) Vertreter: Diehl Patentabteilung

(56) Entgegenhaltungen:
- EP-A1- 2 887 005
- DE-C1- 19 528 347

## Beschreibung

Die Erfindung betrifft einen Spulenkörper zum Tragen eines Wickelpakets eines Lichtwellenleiters, wobei der Spulenkörper für einen unter Wasser startbaren Flugkörper bestimmt ist, wobei der Flugkörper mit dem Spulenkörper und dem Wickelpaket dazu eingerichtet ist, sich bei einer Mission zuerst durch Wasser und anschließend durch Luft zu bewegen und ab Beginn der Mission den Lichtwellenleiter hinter sich abzuwickeln.

Bei zu einer Mission ausgeschickten Flugkörpern kann es vorkommen, dass die Notwendigkeit besteht, dass der Flugkörper während der gesamten Missionszeit mit einer Lenk- beziehungsweise Leitstelle verbunden bleiben muss, um Bild,- Zustands- oder Navigationsdaten austauschen zu können. Dies kann durch einen Datenleiter realisiert werden, der als Daten- oder Signalübertragungsleitung für die Übertragung von Signalen vorbereitet ist. Wegen der hohen Übertragungsbandbreite und gleichzeitig geringer Signaldämpfung werden solche Datenleiter üblicherweise als Lichtwellenleiter ausgeführt. Der Datenleiter ist in einer Spule aufgewickelt und mit einer Spindel / einem Spulenkörper verbunden, die das Wickelpaket trägt. Während der Fahrt (im Wasser) oder während des Flugs (in der Luft) des Flugkörpers wird der Datenleiter von der Spule abgewickelt, sodass die Datenverbindung zwischen einer Sende- beziehungsweise Empfangsstation der Leitstelle und dem bewegten Flugkörper erhalten bleibt. Hierbei ist die abwickelnde Spule üblicherweise am oder im Flugkörper angeordnet, damit der abgewickelte Datenleiter möglichst stationär im Luft- oder Wasserraum verbleiben kann.

Aus der EP 2 887 005 A1 ist ein Spulensystem dieser Art für ein Fahrzeug, insbesondere für einen Lenkflugkörper, bekannt, umfassend eine Unterwasserspule mit zumindest einer Spindel und zumindest einem Wickelpaket, die für einen Abzug bei einer Unterwasserfahrt des Fahrzeugs vorbereitet ist, eine Luftspule mit zumindest einer Spindel und zumindest einem Wickelpaket, die für einen nachfolgenden Abzug in der Luft bis zu einem Ziel und für einen Verbleib am Fahrzeug bis dahin vorbereitet ist, und einen auf beiden Spulen aufgewickelten, durchgehenden Datenleiter. Um ein Verheddern des Datenleiters am Übergang zwischen einem Unterwasserabschnitt und einem Luftabschnitt des Datenleiters zu vermeiden, wird vorgeschlagen, dass die Unterwasserspule abwurffest an der Luftspule befestigt ist.

In der DE 195 28 347 C1 wird ein Wickelträger mit einer Lichtwellenleiter-Bewicklung beschrieben. Die Windungen des Lichtwellenleiters sind gegenseitig durch ein Bindemittel fixiert, um eine Verletzung des Lichtwellenleiters beim Transport und Abspulen zu verringern. Damit das im Bindemittel enthaltene, flüchtige Lösungsmittel für eine gleichförmige Durchtrocknung der Windungen abdiffundieren kann, ist der Wickelkörper aus einem offenporig porösen Material hergestellt und/oder mit Diffusionsbohrungen versehen.

Die Abwicklung eines Lichtwellenleiters von einem Spulenkörper ist nicht unproblematisch.

Aufgabe der Erfindung ist es, Verbesserungen hinsichtlich dieser Abwicklung vorzuschlagen.

Die Aufgabe wird gelöst durch einen Spulenkörper nach Anspruch 1. Bevorzugte oder vorteilhafte Ausführungsformen der Erfindung sowie anderer Erfindungskategorien ergeben sich aus den weiteren Ansprüchen, der nachfolgenden Beschreibung sowie den beigefügten Figuren.

Der Spulenkörper dient zum Tragen eines bestimmungsgemäßen Wickelpakets. Das Wickelpaket enthält einen als Paket aufgewickelten Lichtwellenleiter. Unter "Lichtwellenleiter" wird hier entweder ein reiner Lichtwellenleiter, aber auch ein oben genannter Datenleiter, also eine Leiteranordnung verstanden, die neben dem Lichtwellenleiter noch andere Elemente, z.B. eine parallele Leitung / Kabel / Faser, eine Umhüllung usw. enthält. Der Spulenkörper ist für einen unter Wasser, insbesondere von einem Unterseeboot aus, startbaren Flugkörper bestimmt. Der Flugkörper ist mit dem in ihm montierten Spulenkörper und dem Wickelpaket dazu eingerichtet, sich bei einer Mission zuerst durch Wasser und anschließend durch Luft zu bewegen. Ab Beginn der Mission wickelt der Flugkörper dabei den Lichtwellenleiter zuerst unter Wasser, dann in der Luft, hinter sich ab. Der Flugkörper ist insbesondere ein IDAS (Interactive Defence and Attack system for Submarines), der von einem getaucht fahrenden U-Boot aus abgefeuert werden kann.

"Bestimmungsgemäß" bzw. "bestimmt" heißt, dass das Element, z.B. der Spulenkörper auf eine bestimmte oder einen bestimmten Typ von Gegenstück, z.B. ein Wickelpaket, einen Lichtwellenleiter, einen Flugkörper, eine Art von Mission, eine Art von Abwicklung etc. konstruktiv abgestimmt ist und für den Einsatz dort vorgesehen bzw. dahingehend ausgelegt / konstruiert ist; z.B. für die dadurch bestimmten Geometrieanforderungen usw. ausgelegt ist.

Der Spulenkörper erstreckt sich entlang einer Mittellängsachse und weist eine bezüglich dieser Achse radial nach außen weisende Mantelfläche auf. Der Spulenkörper umgibt dabei einen bzw. seinen Innenraum. Ein Längsabschnitt ("Länge" bezieht sich auf die Mittellängsachse) der Mantelfläche bildet einen Wickelabschnitt zur Aufbringung des Wickelpakets. Das Wickelpaket ist also in Längsrichtung des Spulenkörpers gesehen auf die Länge des Wickelabschnitts der Mantelfläche bzw. des Spulenkörpers begrenzt. Der Wickelabschnitt kann auch die gesamte Länge der Mantelfläche einnehmen.

Die Mantelfläche weist ein Auslassmittel auf. Das Auslassmittel dient bzw. ist eingerichtet zum Abtransport von eventueller - jedoch in der Regel - vorhandener Luft und gegebenenfalls von Wasser aus dem Wickelabschnitt, d.h. bei montiertem Wickelpaket von einer Grenzfläche zwischen Wickelpaket und Spulenkörper weg. Die Grenzfläche stellt einerseits die Oberfläche des Spulenkörpers bzw. der Mantelfläche bzw. des Wickelabschnitts dar. Andererseits ist die Grenzfläche die radial einwärts weisende innere Oberfläche des Wickelpakets, mit der das Wickelpaket an der Mantelfläche bzw. dem Wickelabschnitt anliegt. Die Grenzfläche ist mit anderen Worten die Zwischenfläche zwischen bzw. die Berührungsfläche von Wickelpaket und Spulenkörper

Nach dem Aufbringen des Wickelpakets liegt dieses mit seiner inneren Oberfläche bzw. die Innerste Lage Lichtwellenleiter mit Kontakt am Wickelabschnitt bzw. der Mantelfläche an. Zwischen den Windungen des Lichtwellenleiters verbleiben im Wickelpaket Zwischenräume / Hohlräume sowohl an Grenzfläche als auch im gesamten Wickelpaket. Luft / Wasser kann von diesen Hohlräumen bis zur Grenzfläche / der Mantelfläche / dem Wickelabschnitt gelangen und von dort durch das Auslassmittel abtransportiert werden..

Mit anderen Worten ist - im bestimmungsgemäßen Montagezustand des Wickelpakets - die Grenzfläche zwischen Wickelpaket und Spulenkörper und damit die radial innere Oberfläche des Wickelpakets erfindungsgemäß mit dem Auslassmittel versehen. Der Spulenkörper und das Wickelpaket bilden - im bestimmungsgemäßen Montagezustand - zusammen eine Spule für den bzw. im Flugkörper. Der Flugkörper enthält dann die Spule.

Die Erfindung beruht auf folgenden Erkenntnissen bzw. Beobachtungen: Bei geringen Wasserdrücken (z.B. geringen Tauchtiefen eines einen Flugkörper mit Spule abfeuernden U-Bootes) kann es vorkommen, dass in der durch die Launchsequenz des Flugkörpers bestimmten Flutungszeit (Zeit des Kontakts der Spule mit Umgebungs- / Außenraumwasser) keine vollständige Durchfeuchtung des Wickelpakets (Spulenpakets) der Lichtwellenleiter-Spule des Flugkörpers gemäß Stand der Technik erreicht wird. Die vollständige Durchfeuchtung des Wickelpakets ist jedoch eine notwendige Voraussetzung für einen erfolgreichen Abspulvorgang mit einem in der Praxis verwendeten Lichtwellenleiter-Aufbau (LWL Kabelaufbau / Datenleiter). Die Gründe hierfür sollen an dieser Stelle nicht weiter erläutert werden.

Bei Flutungsversuchen mit Spulen nach dem Stand der Technik konnte die Luft im teildurchlässigen Wickelpaket bei der Flutung nicht aus dem Wickelpaket entweichen. Bei geringem Flutungsdruck verhinderte die eingeschlossene Luft die vollständige Durchfeuchtung.

Gemäß der Erfindung wird nun über das Auslassmittel diese zu Missionsbeginn im Wickelpaket vorhandene Luft bei gleichem Flutungsdruck und gleicher Flutungszeit besser bzw. schneller aus der Spule entfernt. So wird eine bessere bzw. schnellere Durchfeuchtung des Wickelpakets erreicht. Durch das an der Mantelfläche angeordnete Auslassmittel kann Luft auch über die Mantelfläche bzw. Grenzfläche zwischen Wickelpaket und Spulenkörper aus dem Wickelpaket entweichen. Bei Aufliegen des Wickelpakets auf einer Oberfläche bzw. Mantelfläche ohne Auslassmittel nach dem Stand der Technik (z.B. glatt, unstrukturiert) war die radial einwärtige innere Oberfläche des Wickelpakets (Grenzfläche) bisher für das Entweichen von Luft abgedichtet, stand also hierfür nicht zur Verfügung.

Dank der nunmehr geschaffenen "Entlüftung" an der Grenzfläche durch das Auslassmittel erfolgt eine schnelle und vollständige Durchfeuchtung des Wickelpakets. Hierdurch erfolgt ein erfolgreicher Abspulvorgang.

In einer bevorzugten Ausführungsform weist die Mantelfläche ein Einlassmittel zum Einlass von Wasser aus der Umgebung bzw. einem Außenraum des Spulenkörpers zum Wickelabschnitt hin auf. Der Außenraum ist derjenige Raum, der den Spulenkörper mit aufgebrachtem Wickelpaket umgibt. Im Betrieb ist der Außenraum - zumindest teilweise - mit Wasser geflutet. Insbesondere ist das Wickelpaket im Betrieb, beim Missionsbeginn (z.B. in einem Torpedorohr eines Unterseebootes) und während der Tauchfahrt vollständig mit Wasser umgeben. Einlassmittel und Auslassmittel sind dabei derart zu einem Zusammenwirken eingerichtet, dass - im Betrieb und bei montiertem Wickelpaket, d.h. bei Flutung der fertigen Spule während einer Mission unter Wasser - mit Hilfe des über das Einlassmittel eingelassenen Wassers eventuelle Luft aus dem Wickelpaket zum Auslassmittel hin verdrängt wird. Das Zusammenwirken führt also dazu, dass im Betrieb Wasser durch das Einlassmittel zur Grenzfläche zwischen Wickelpaket und Spulenkörper strömt und damit auch radial auswärts in die innere Oberfläche des Wickelpakets eindringt. So stellt sich eine Strömung von der Grenzfläche durch zumindest einen Teil des Wickelpakets und zurück zur Grenzfläche ein. Luft und ggf. Wasser, das dann Luft mitführt wird dadurch aus zumindest einem Teil des Wickelkörpers verdrängt. Der Teil ist insbesondere derjenige, der nahe der Grenzfläche liegt. Dieser Bereich war nach dem Stand der Technik von Wasser, das zum Verdrängen der Luft nötig ist, schlecht erreichbar, da das Wasser bisher nur an der radial äußeren Fläche und ggf. an den Stirnseiten des Wickelpakets in dieses eindringen konnte.

Insgesamt wird so die Verdrängung von Luft aus dem Wickelpaket dank des Einlassmittels weiter verbessert.

In einer bevorzugten Ausführungsform ist das Auslassmittel zum Abtransport der Luft und gegebenenfalls des Wassers zum Innenraum hin eingerichtet. Luft / Wasser wird also von der Mantelfläche, insbesondere durch diese bzw. den Spulenkörper hindurch, zum Innenraum hin abtransportiert. Der Innenraum, vor allem wenn dieser ein geschlossener Hohlraum ist und somit nicht mit Umgebungswasser gefüllt ist oder wird, bietet den Vorteil, dass Luft / Wasser dort ungehindert einströmen kann, sodass ein besonders guter Abtransport von der Grenzfläche bzw. dem Wickelabschnitt stattfinden kann.

Das Auslassmittel ist durch eine geometrische Strukturierung der Mantelfläche gebildet. Insoweit ein Einlassmittel vorhanden ist, kann auch dieses in einer bevorzugten Ausführungsform durch eine geometrische Strukturierung der Mantelfläche gebildet sein. Derartige geometrische Strukturen sind besonders einfach auf die Mantelfläche aufzubringen und/oder können besonders gut zur Führung von Luft / Wasser dienen. Die Strukturen sind dabei so gewählt, dass der darüber verlaufenden Lichtwellenleiter nicht geknickt oder unregelmäßig gebogen wird. Insbesondere sind die Strukturen sehr klein gegenüber dem Umfang des Spulenkörpers gewählt, insbesondere kleiner als 1 %, kleiner als 0,5 %, kleiner als 0,25 %.

Erfindungsgemäß weist das Auslassmittel als geometrische Strukturierung mindestens eine in die Mantelfläche eingebrachte erste Nut auf. Dabei weist jede der ersten Nuten im Wickelabschnitt zumindest eine Längskomponente auf. Insbesondere weist - im Zusammenhang mit dem unten genannten Transport zum Innenraum hin - mindestens eine der ersten Nuten außerdem mindestens eine Durchbrechung zum Innenraum hin auf. Die Nuten sind in die Mantelfläche eingebracht und sind damit radial auswärts, also zum Wickelpaket hin geöffnet. Mit anderen Worten sind in die Mantelfläche radial einwärtig Kanäle eingebracht. "Zumindest eine Längskomponente" bedeutet, dass die Nuten sich wenigstens nicht vollständig in Umfangsrichtung erstrecken. Insbesondere verlaufen die Nuten an keiner Stelle in Umfangsrichtung, sondern deren Verlauf besitzt an jedem Ort eine Längskomponente, also Richtungskomponente in Längsrichtung, also parallel zur Mittellängsachse. Nuten können besonders einfach in die Mantelfläche eingebracht werden. Durch die Durchbrechungen, welche sich insbesondere am Nutgrund befinden, kann ein besonders einfacher Transport von Luft / Wasser zum Innenraum hin erfolgen. Durch die Längskomponente ist sichergestellt, dass die üblicherweise in Umfangsrichtung verlaufenden Lichtwellenleiter des Wickelpakets sich nicht in die Nuten einlegen und diese blockieren. Die Durchbrechung ist insbesondere eine Bohrung. Bohrungen sind besonders einfach in den Spulenkörper einzubringen. Insbesondere befinden sich die Bohrungen am Nutgrund und/oder verlaufen radial einwärts zum Innenraum hin.

In einer bevorzugten Ausführungsform befindet sich mindestens eine der ersten Nuten vollständig innerhalb des Wickelabschnitts. Insbesondere befinden sich mehrere oder alle der ersten Nuten dort. "Innerhalb" ist so zu verstehen, dass die Nut an jeder Stelle einen jeweiligen Mindestabstand zu den Längsenden des Wickelabschnittes aufweist. Die Nuten sind so vom Wickelpaket vollständig überdeckt und weisen keinerlei Verbindung zum Außenraum hin auf. So wird erreicht, dass die ersten Nuten in erster Linie der Abfuhr von Luft dienen. Vor allem wenn die Nuten mithilfe von Durchbrechungen mit dem Innenraum kommunizieren, wird so vermieden, dass Wasser aus dem Außenraum in den Innenraum gelangt, ohne dabei zumindest Luft aus dem Wickelpaket mitzuführen. Denn Wasser im Innenraum kann insbesondere unerwünscht sein, wie weiter unten ausgeführt wird.

In einer bevorzugten Ausführungsform weist das Einlassmittel als geometrische Strukturierung mindestens eine in die Mantelfläche eingebrachte zweite Nut auf, wobei jede der zweiten Nuten im Wickelabschnitt zumindest eine Längskomponente aufweist. Für die zweiten Nuten gelten sinngemäß die gleichen Aussagen wie für die ersten Nuten (radial auswärts, zum Wickelpaket hin geöffnet, Längskomponente, usw.). Im Betrieb dienen die zweiten Nuten jedoch der Zuführung von Wasser aus dem Außenraum zur Grenzfläche zwischen Wickelpaket und Mantelfläche hin und damit der Zufuhr von Wasser an die innere Oberfläche des Wickelpakets. Wie oben erläutert, soll dieses in das Wickelpaket zumindest teilweise eindringen und dort Luft - unter anderem zum Auslassmittel hin - aus dem Wickelpaket verdrängen bzw. herausdrängen.

In einer bevorzugten Variante dieser Ausführungsform überragt mindestens eine der zweiten Nuten den Wickelabschnitt und damit dann auch das aufgebrachte Wickelpaket an wenigstens einem, insbesondere an beiden Längsenden mit einem Aufnahmeabschnitt für Wasser. Im Bereich des Aufnahmeabschnitts befindet sich kein Wickelpaket, sodass dort im Betrieb ein ungehindertes Zuströmen, also eine Aufnahme von Wasser aus dem Außenraum in die zweite Nut erfolgen kann. So wird sichergestellt, dass im Betrieb genügend Wasser durch das Einlassmittel dem Wickelabschnitt bzw. der Grenzfläche usw. zugeführt wird. Für den Fall, dass der Wickelabschnitt die gesamte Mantelfläche einnimmt, kann das "Überragen" auch darin bestehen, dass die Nut an einer nicht vom Wickelpaket verdeckten Stirnseite des Spulenkörpers offen ist und dort einen Wassereintritt ermöglicht.

In einer bevorzugten Ausführungsform erstreckt sich mindestens eine, vorzugsweise mehrere oder alle, der ersten Nuten und/oder - falls vorhanden - mindestens eine, vorzugsweise mehrere oder alle, der zweiten Nuten entlang einer geraden Linie. Insbesondere handelt es sich dabei um eine sich in Längsrichtung erstreckende gerade Linie. Eine solche gerade Linie ergibt sich insbesondere bei Längsnuten auf Spulenkörpern, die eine Oberfläche in Form eines geraden Kreiszylinders oder Kegels aufweisen. Die Linie ist dann eine Längsgerade. Als "gerade Linie" wird hier auch eine Schraubenlinie auf der Mantelfläche verstanden, wenn eine solche Linie bei Abwicklung der Mantelfläche auf eine Ebene eine Gerade ergibt. Derartige Nuten sind fertigungstechnisch besonders einfach in einen Spulenkörper einzubringen.

In einer bevorzugten Ausführungsform sind zumindest drei in Umfangsrichtung des Spulenkörpers um die Mittellängsachse benachbarte erste und zweite Nuten in Umfangrichtung alternierend angeordnet. "Zumindest drei" sind dabei zu verstehen als mindestens zwei erste ("1") und mindestens eine zweite Nut ("2") oder mindestens eine erste und mindestens zwei zweite Nuten. Insbesondere ist dabei stets die gleiche (gerade) Anzahl (also in Summe mindestens vier) von mindestens zwei ersten und mindestens zwei zweiten Nuten vorgesehen. In Umfangsrichtung ergeben sich also z.B. Nutfolgen von 1-2-1, 2-1-2, 1-2-1-2, 1-2-1-2 ... - 1 oder 1-2-1-2- ... -2.

In einer bevorzugten Ausführungsform weist die Mantelfläche und/oder der Wickelabschnitt einen runden Querschnitt auf. Der Querschnitt ist insbesondere kreisförmig, insbesondere von gleichbleibendem Durchmesser entlang der Mittellängsachse. Die Mantelfläche und/oder der Wickelabschnitt ist insbesondere ein gerader Kreiszylinder. Derartige Spulenkörper eignen sich besonders gut für den beabsichtigten Einsatzzweck in einem Flugkörper.

In einer bevorzugten Ausführungsform ist der Innenraum ein abgeschlossener Hohlraum. Derartige Spulenkörper sind besonders leicht und stabil herstellbar.

In einer bevorzugten Variante dieser Ausführungsform weist der Innenraum ein Ventil zur Entleerung des Hohlraumes auf. Nachteil des abgeschlossenen Hohlraumes ist, dass sich eventuell durch das Auslassmittel im Betrieb eingebrachtes Wasser dort sammelt und für die weitere Mission des Flugkörpers mitgeführt werden muss. Durch ein Ventil kann dieses Wasser aus dem Hohlraum und somit dem gesamten Flugkörper entleert werden. Ein derartiges Ventil kann insbesondere gesteuert oder selbsttätig nach Übertritt des Flugkörpers vom Wasser in die Luft betätigt werden, um den Hohlraum zu leeren. So herrschen insbesondere für den durch die Luft führenden Abschnitt der Mission keine undefinierten (unbekannte Menge Wasser im Hohlraum) Masseverhältnisse im Flugkörper, was zu einem definierten Flugverhalten führt.

Die Aufgabe der Erfindung wird auch gelöst durch eine Spule gemäß Patentanspruch 16.

Die Spule enthält einen erfindungsgemäßen Spulenkörper und das Wickelpaket. Die Spule und zumindest ein Teil deren Ausführungsformen sowie die jeweiligen Vorteile wurden sinngemäß bereits im Zusammenhang mit dem erfindungsgemäßen Spulenkörper erläutert.

Die Erfindung beruht auf folgenden Erkenntnissen, Beobachtungen bzw. Überlegungen und weist noch die nachfolgenden Ausführungsformen auf. Die Ausführungsformen werden dabei teils vereinfachend auch "die Erfindung" genannt. Die Ausführungsformen können hierbei auch Teile oder Kombinationen der oben genannten Ausführungsformen enthalten oder diesen entsprechen und/oder gegebenenfalls auch bisher nicht erwähnte Ausführungsformen einschließen.

Gemäß der Erfindung ergibt sich eine - insbesondere durch den Spulenkörper gebildete - Vorrichtung zur zuverlässigen Durchfeuchtung des Spulenpakets bei Flutung der Lichtwellenleiterspule (Spule, Wickelpaket) in einem Flugkörper, z.B. einem IDAS. Insbesondere durch die Verbindung eines Innenraumes (Hohlraumes) im Spulenkörper durch Bohrungen und Kanäle (erste, ggf. auch zweite Nuten) mit dem Wickelpaket (bzw. dessen innerer Oberfläche / der Grenzfläche) wird eine zuverlässige Durchfeuchtung des Spulenpakets (Wickelpaket) der Spule (insb. LWL-Spule des IDAS) bei Flutung und geringem Wasserdruck sowie kurzer Flutungszeit erreicht. Der "geringe Wasserdruck" und die "kurze Flutungszeit" sind durch die operationellen Bedingungen des IDAS Flugkörpers bestimmt.

Gemäß der Erfindung werden (zweite) Nuten in die Oberfläche eines Spulenkörpers eingebracht, so dass Wasser durch diese Nuten zur Zylinderfläche, die sich Wickelpaket und Wickelkörper teilen, also der Oberfläche des Spulenkörpers bzw. der Grenzfläche, gelangen kann. Diese (zweiten) Nuten sind länger als das Wickelpaket ausgeführt, überragen dieses also in Längsrichtung. Außerdem sind (erste), insbesondere kürzere, Nuten, in der Oberfläche (insbesondere Zylinderfläche) vorgesehen. Von diesen aus führen insbesondere Bohrungen in den (insbesondere zylinderförmigen) Hohlraum des Spulenkörpers. Im Gegensatz zu Ausführungen gemäß Stand der Technik stellt sich so eine Strömung vom Wickelpaket (Spulenpaket) in den Hohlraum ein, wenn das Spulenpaket mit Wasserüberdruck von außen (Außenraum) beaufschlagt wird. Die Luft kann dank des Auslassmittels vollständig aus dem Spulenpaket, nämlich insbesondere zumindest teilweise über die ersten Nuten mit Durchbrechungen in den Hohlraum, entweichen, so dass eine vollständige Durchfeuchtung des Wickelpakets erreicht werden kann.

Nach dem Flutungsvorgang kann sich im Hohlraum des Spulenkörpers auch Wasser befinden, welches insbesondere über die Durchbrechungen zusammen mit Luft aus dem Wickelpaket entwichen ist. Diese Wassermenge soll aufgrund des Massenzuwachses des Flugkörpers möglichst geringgehalten werden. Zum einen kann das optimale Volumen durch Versuche ermittelt werden, so dass mit der geringstmöglichen Menge an Ballastwasser zuverlässige Durchfeuchtung erreicht werden kann. Zum anderen kann ein Ventil zum Ablassen des Ballastwassers aus diesem Hohlraum nach Austritt des Flugkörpers aus dem Wasser ebenfalls vorgesehen sein.

Die Erfindung ermöglicht den zuverlässigen Abspulvorgang des Lichtwellenleiters bei allen Launchbedingungen eines Flugkörpers aus einem Unterseeboot (Tauchtiefe / Flutungsdauer) durch zuverlässige Durchfeuchtung des Spulenpakets. Die Erfindung bewirkt eine Verkürzung der Flutungszeit und/oder das Ausreichen geringeren Wasserüberdrucks, um das Wickelpaket ausreichend zu durchfeuchten.

Die Grenzfläche entspricht neben der Mantelfläche des Spulenkörpers auch der radial inneren Oberfläche des Wickelpakets. An der Mantelfläche geschaffene Kanäle etc. führen daher dazu, dass die nach dem Stand der Technik dichtend anliegende Oberfläche des Spulenkörpers, die dabei ein Entweichen von Luft aus der inneren Oberfläche des Wickelpakets verhindert, durch das Auslassmittel eine Luft / Wasserströmung nunmehr zulässt. Luft / Wasser kann so auch an der radial inneren Oberfläche des Wickelpakets entweichen. Entsprechendes gilt für die Versorgung der inneren Oberfläche des Wickelpakets mit Wasser zur Verdrängung der Luft. Auch hier wird durch das Einlassmittel bzw. entsprechende Kanäle Wasser dorthin transportiert, was bei einer glatten bzw. dichten Oberfläche des Spulenkörpers nach dem Stand der Technik nicht möglich war.

Für alle Ausführungsformen gilt, dass das Auslassmittel einen Bestandteil einer in dem Spulenkörper, d. h. insbesondere in dessen Mantelfläche, ausgebildeten, wenigstens einen sich zumindest abschnittsweise in einer oder mehreren Richtungen, d. h. z. B. in Axialrichtung und/oder Umfangsrichtung bezüglich der Längsmittelachse, entlang der Mantelfläche des Spulenkörpers erstreckenden ersten Strömungskanal umfassenden Strömungskanalstruktur bilden kann. Hierunter ist auch zu verstehen, dass das Auslassmittel strömungstechnisch mit einem entsprechenden ersten Strömungskanal kommuniziert. Funktional betrachtet kann ein entsprechender erster Strömungskanal insbesondere zum Abtransport von eventueller Luft und gegebenenfalls von Wasser aus dem Wickelabschnitt eingerichtet sein. Hieraus ergibt sich, dass ein entsprechender erster Strömungskanal sich typischerweise zumindest abschnittsweise im Bereich des Wickelabschnitts des Spulenkörpers erstreckt.

Gleichermaßen kann das bzw. ein entsprechendes Einlassmittel einen Bestandteil einer in dem Spulenkörper, d. h. insbesondere in dessen Mantelfläche, ausgebildeten, wenigstens einen sich zumindest abschnittsweise in einer oder mehreren Richtungen, d. h. z. B. in Axialrichtung und/oder Umfangsrichtung bezüglich der Längsmittelachse, entlang der Mantelfläche des Spulenkörpers erstreckenden zweiten Strömungskanal umfassenden Strömungskanalstruktur bilden. Hierunter ist auch zu verstehen, dass das Einlassmittel strömungstechnisch mit einem entsprechenden zweiten Strömungskanal kommuniziert. Funktional betrachtet kann ein entsprechender zweiter Strömungskanal insbesondere zum Einlass von Wasser aus dem Außenraum des Spulenkörpers zum Wickelabschnitt eingerichtet sein. Hieraus ergibt sich, dass ein entsprechender zweiter Strömungskanal sich typischerweise zumindest abschnittsweise außerhalb des Wickelabschnitts des Spulenkörpers erstreckt.

Der Spulenkörper kann sonach im Bereich seiner Mantelfläche mit wenigstens einem sich zumindest abschnittsweise in einer oder mehreren Richtungen, d. h. z. B. in Axialrichtung und/oder in Umfangsrichtung, entlang der Mantelfläche des Spulenkörpers erstreckenden ersten und/oder zweiten Strömungskanal ausgebildet sein. Jeder Strömungskanal kann gegebenenfalls in mehrere Strömungskanalsegmente unterteilt sein, welche sich in gleichen oder unterschiedlichen Richtungen entlang des Spulenkörpers erstreckend ausgebildet sind. Unabhängig von seiner konkreten räumlichen Erstreckung und/oder Segmentierung kann jeder Strömungskanal z. B. durch eine entsprechende geometrische Strukturierung, d. h. z. B. durch eine nutartige bzw. - förmige Vertiefung in der Mantelfläche des Spulenkörpers, ausgebildet sein.

Sofern sowohl wenigstens ein erster als auch wenigstens ein zweiter Strömungskanal vorhanden ist, können diese miteinander kommunizieren, insbesondere derart, dass ein Fluid, wie z. B. Wasser, von dem bzw. einem zweiten Strömungskanal in den bzw. einen ersten Strömungskanal und damit von dem Einlassmittel zu dem Auslassmittel strömen kann. Derart können jeweilige erste und zweite Strömungskanäle zu einem Zusammenwirken eingerichtet sein, dass mithilfe von eingelassenem Wasser eventuelle Luft aus dem Wickelpacket zu dem Auslassmittel hin verdrängt wird. Weiterhin kann derart über eine geeignete räumliche Konfiguration jeweiliger erster und zweiter Strömungskanäle ein gezieltes Führen, d. h. insbesondere Zu- und Abführen eines Fluids, entlang der Mantelfläche des Spulenkörpers realisiert werden.

Weitere Merkmale, Wirkungen und Vorteile der Erfindung ergeben sich aus der nachfolgenden Beschreibung eines bevorzugten Ausführungsbeispiels der Erfindung sowie der beigefügten Figuren. Dabei zeigen, jeweils in einer schematischen Prinzipskizze:
- Figur 1: eine Spule in einem Flugkörper gemäß Stand der Technik,
- Figur 2: einen erfindungsgemäßen Spulenkörper im Betrieb in perspektivischer Ansicht,
- Figur 3: den Spulenkörper aus Fig. 2 im Querschnitt entlang der Linie III-III.

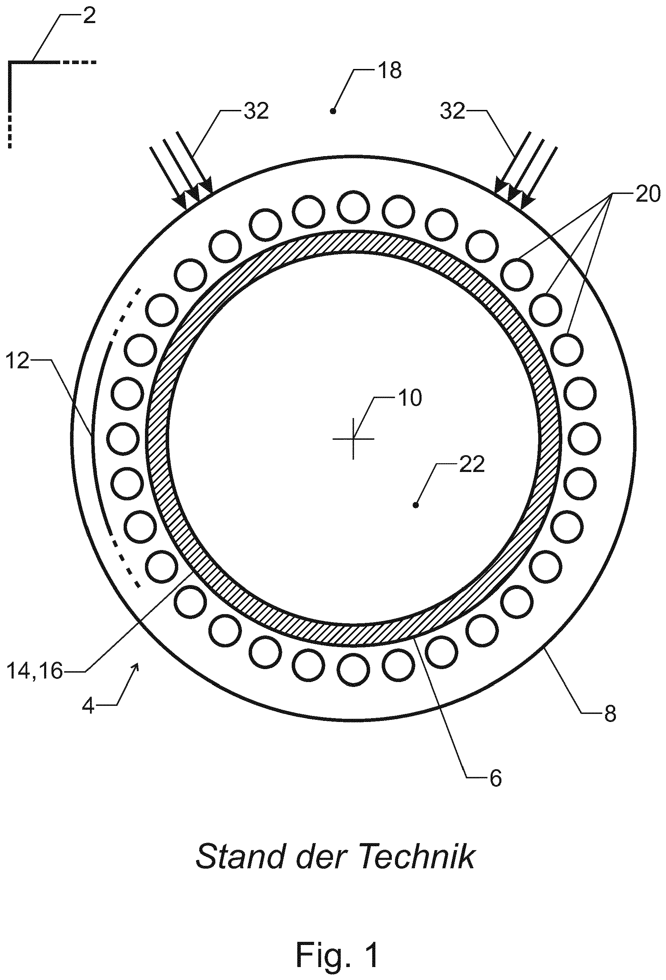

Fig. 1. zeigt lediglich schematisch angedeutet einen Flugkörper 2, hier einen IDAS-Lenkflugkörper. Dieser beinhaltet eine hier im Querschnitt dargestellte Spule 4. Diese Spule 4 weist einen Spulenkörper 6 gemäß Stand der Technik, hier in Form eines geraden Kreiszylinders auf, auf den ein Wickelpaket 8 aufgebracht ist. Der Spulenkörper 6 erstreckt sich entlang einer Mittellängsachse 10, die hier senkrecht zur Zeichenebene verläuft. Das Wickelpaket 8 ist eine Wicklung eines Lichtwellenleiters 12, der sich - hier nur symbolisch angedeutet - in einer Vielzahl von Windungen in Umfangsrichtung (bezogen auf die Mittellängsachse 10) um den Spulenkörper 6 herum erstreckt. Der Lichtwellenleiter 12 ist hierbei strenggenommen ein Datenleiter, der - in nicht näher erläuterter Weise - neben einem eigentlichen Lichtwellenleiter weitere Fasern und eine Umhüllung aufweist. Die Länge des Lichtwellenleiters 12 beträgt ca. 20 km. Der Durchmesser des Spulenkörpers ca. 100 mm. Das Wickelpaket 8 und somit die untersten Windungen des Lichtwellenleiters 12 liegen dicht auf einer radial nach außen weisenden Oberfläche bzw. Mantelfläche 14 des Spulenkörpers 6 auf. Damit ist eine Grenzfläche 16 zwischen dem Spulenkörper 6 und dem Wickelpaket 8 gebildet.

Beim Einsatz der Spule 4 tritt folgendes Problem auf. Nach dem Start des Flugkörpers 2 von einem nicht dargestellten Unterseeboot aus bewegt sich dieser unter Wasser, wodurch der Außenraum 18 mit Wasser 32 geflutet wird. Das Wickelpaket 8 wird von radial außen her mit Hilfe von eindringendem Wasser 32 (hier durch Pfeile angedeutet) durchfeuchtet. Allerdings hält sich radial innen im Wickelpaket 8 Luft 20, hier angedeutet durch Blasen, die nicht entweicht bzw. nicht von Wasser 32 verdrängt wird. Das Wickelpaket 8 wird also nicht vollständig durchfeuchtet, was zu Problemen beim Abwickeln des Lichtwellenleiters 12 führt. Der Spulenkörper 6 weist außerdem einen Innenraum 22 auf.

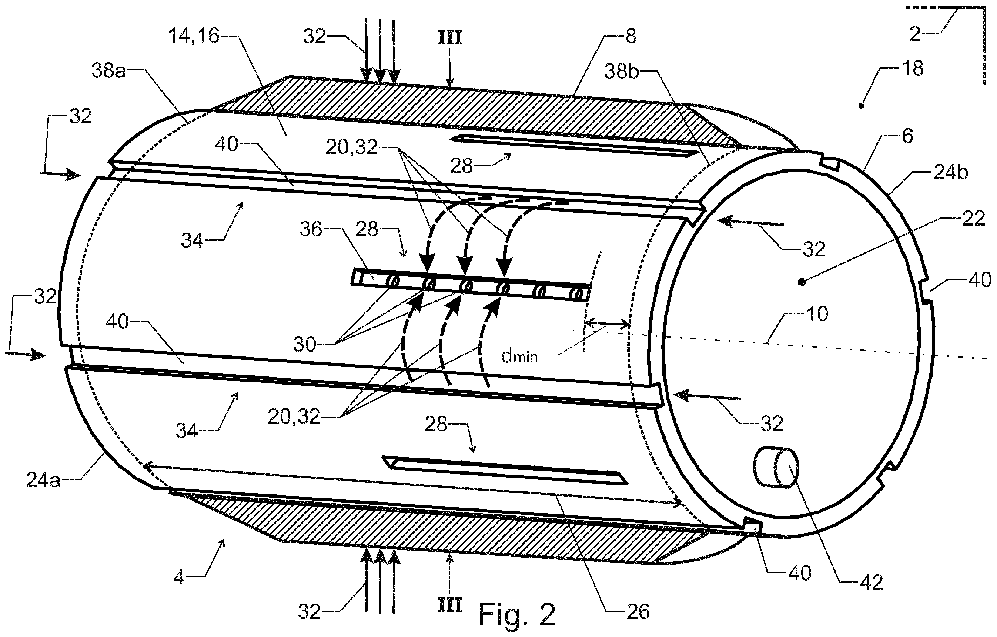

Figur 2 zeigt eine Spule 4 in einer perspektivischen Ansicht. Der Spulenkörper 6 gemäß der Erfindung unterscheidet sich von dem aus Figur 1. Das Wickelpaket 8 sowie der restliche Flugkörper 2 sind identisch zu dem aus Fig. 1. Das Wickelpaket 8 bedeckt nicht die gesamte Mantelfläche 14, sondern endet von den axialen Längsenden 24a, b des Spulenkörper 6 beanstandet, wie in Figur 2 durch gestrichelte Linien angedeutet ist. Das Wickelpaket 8 bedeckt daher lediglich einen Wickelabschnitt 26 (durch einen Pfeil angedeutet) in Form eines Längsabschnittes (bezüglich der Mittellängsachse 10) der Mantelfläche 14. Das Wickelpaket 8 ist also nur im Wickelabschnitt 26 auf den Spulenkörper 6 aufgebracht.

Die Mantelfläche 14 weist im Gegensatz zum Stand der Technik ein Auslassmittel 28 auf. Dieses dient zum Abtransport von Luft 20 (angedeutet durch gestrichelte Pfeile) aus dem Wickelabschnitt 26 bzw. von der Mantelfläche 14 bzw. Grenzfläche 16 weg. Die Grenzfläche 16 entspricht dabei der radial inneren Oberfläche des Wickelpakets 8. Der Transport erfolgt hier zum Innenraum 22 hin mit Hilfe von Durchbrechungen 30 des Spulenkörpers 6. Die teilweise Krümmung der die Luft 20 symbolisierenden Pfeile deutet an, dass Luft 20 nicht nur von der Grenzfläche 16 selbst, sondern auch radial auswärts aus dem Inneren des Wickelpaketes 8 abtransportiert wird. So wird auch die gemäß Fig. 1 angedeutete Rest-Luft 20 aus dem Wickelpaket 8 entfernt und das Wickelpaket 8 vollständig durchfeuchtet.

Die Mantelfläche 14 weist weiterhin im Unterschied zu Fig. 1 auch ein Einlassmittel 34 auf. Dieses dient zum Einlass von Wasser 32 aus dem Außenraum 18 zum Wickelabschnitt 26 bzw. der Grenzfläche 16 und damit zur radial inneren Oberfläche des Wickelpakets 8 hin. Der Zustrom des Wasser 32 verstärkt den Effekt, Luft 20 aus dem Wickelpaket 8 entlang der gestrichelten Pfeile und schließlich durch das Auslassmittel 28 abzutransportieren. Einlassmittel 34 und Auslassmittel 28 wirken also zusammen, um gemeinsam den Transport von Wasser 32 bzw. dadurch mitgeführter oder verdrängter Luft 20 durch das bzw. aus dem Wickelpaket 8 zu bewirken.

Mit Hilfe der Durchbrechungen 30 ist das Auslassmittel 28 dazu eingerichtet, Luft 20 zum Innenraum 22 hin abzutransportieren.

Auslassmittel 28 und Einlassmittel 34 sind die durch geometrische Strukturierung der Mantelfläche 14 gebildet: Die geometrische Strukturierung besteht darin, dass das Auslassmittel 28 Nuten 36 und das Einlassmittel 34 Nuten 40 enthält, die radial einwärts in die Mantelfläche 14 eingebracht sind. Die Nuten 36 weisen bezüglich ihrer Erstreckungsrichtung ausschließlich eine Längskomponente (bzgl. der Mittellängsachse 10) auf, sind also in Form von Geraden ausgeführt, die parallel zur Mittellängsachse 10 verlaufen. Die Durchbrechungen 30 in Form von radial einwärtigen Bohrungen befinden sich am jeweiligen Nutgrund der Nuten 36.

Die Nuten 36 befinden sich vollständig innerhalb des Wickelabschnitts 26, sind also von dessen jeweiligen Längsenden 38a, b durch einen jeweiligen Mindestabstand dmin beanstandet. Im durch den Abstand dmin gebildeten in Umfansrichtung umlaufenden Rand ist der Wickelabschnitt 26 vom Außenraum 18 durch das dicht anliegende Wickelpaket 8 abgedichtet. So kann kein Wasser 32 aus dem Außenraum 18 durch die Nuten 36 und Durchbrechungen 30 unmittelbar in den Innenraum 22 gelangen.

Die Nuten 40 überragen den Wickelabschnitt 26 an dessen Längsenden 38a, b. So kann Wasser 32 ungehindert aus dem Außenraum 18 in die Nuten 40 einströmen und in den Wickelabschnitt 26 und von dort in das Wickelpaket 8 hinein transportiert werden.

Der Innenraum 22 ist hier ein abgeschlossener Hohlraum und weist ein hier nur symbolisch angedeutetes Ventil 42 auf, das eine Entleerung des Innenraums 22 ermöglicht, sobald der Flugkörper 2 bei seiner Mission aus dem Wasser in die Luft übergetreten ist.

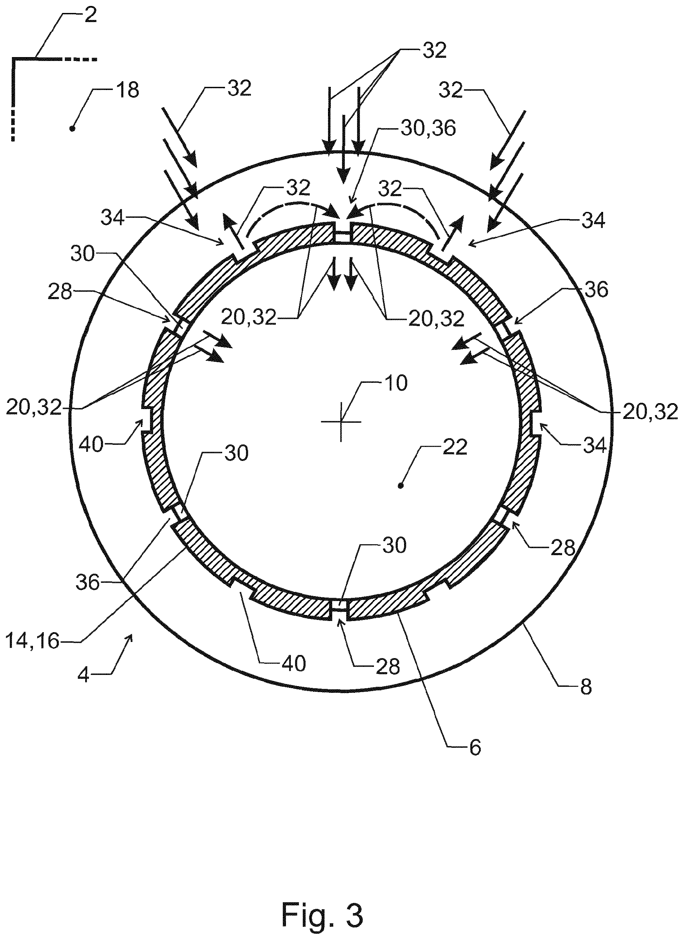

Figur 3 zeigt einen Querschnitt an der Längsposition III-III durch die Spule 4, wobei an dieser Längsposition die Nuten 36 jeweils Durchbrechungen 30 aufweisen. Das Auslassmittel 28 weist insgesamt sechs Nuten 36, das Einlassmittel 34 sechs Nuten 40 auf, die jeweils alternierend benachbart und gleich beabstandet über den Umfang des Spulenkörper 6 verteilt sind. Figur 3 zeigt, dass die Nuten 36, 40 den Spulenkörper 6 jeweils nicht durchdringen, sondern nur in dessen radial auswärtige Oberfläche bzw. Mantelfläche 14 eingebracht sind. Lediglich die Durchbrechungen 30 bilden eine Verbindung und damit einen Strömungskanal für Luft 20 / Wasser 32 von der Grenzfläche 16 zum Innenraum 22 hin. Figur 3 zeigt nochmals den kreisrunden Querschnitt sowohl des Spulenkörper 6 als auch der gesamten Spule 4 einschließlich Wickelpaket 8.

Figur 3 verdeutlicht nochmals, dass entlang der gestrichelten Pfeile eingeschlossene Luft 20 und Wasser 32 nicht nur direkt von der Grenzfläche 16, sondern auch aus dem Inneren des Wickelpakets 8 abtransportiert werden bzw. dass einströmendes Wasser 32 die eingeschlossene Luft 20 verdrängt, mitnimmt und dadurch abtransportiert.

Die Breite der Nuten 36, 40 in Umfangsrichtung beträgt hier 0,8mm, was ca. 0,25% des Umfangs des Spulenkörpers 6 entspricht.

Wenngleich in den Fig. nicht gezeigt, gilt für alle Ausführungsbeispiele, dass das Auslassmittel 28 einen Bestandteil einer in dem Spulenkörper 6, d. h. insbesondere in dessen Mantelfläche 14, ausgebildeten, wenigstens einen sich zumindest abschnittsweise in einer oder mehreren Richtungen, d. h. z. B. in Axialrichtung und/oder Umfangsrichtung bezüglich der Längsmittelachse 10, entlang der Mantelfläche 14 des Spulenkörpers 6 erstreckenden ersten Strömungskanal umfassenden Strömungskanalstruktur bilden kann. Hierunter ist auch zu verstehen, dass das Auslassmittel 28 strömungstechnisch mit einem entsprechenden ersten Strömungskanal kommuniziert. Funktional betrachtet ist ein entsprechender erster Strömungskanal insbesondere zum Abtransport von eventueller Luft 20 und gegebenenfalls von Wasser 32 aus dem Wickelabschnitt 26 eingerichtet. Hieraus ergibt sich, dass ein entsprechender erster Strömungskanal sich typischerweise zumindest abschnittsweise im Bereich des Wickelabschnitts 26 des Spulenkörpers 6 erstreckt.

Gleichermaßen kann das bzw. ein entsprechendes Einlassmittel 35 einen Bestandteil einer in dem Spulenkörper 6, d. h. insbesondere in dessen Mantelfläche 14, ausgebildeten, wenigstens einen sich zumindest abschnittsweise in einer oder mehreren Richtungen, d. h. z. B. in Axialrichtung und/oder Umfangsrichtung bezüglich der Längsmittelachse 10, entlang der Mantelfläche 14 des Spulenkörpers 6 erstreckenden zweiten Strömungskanal umfassenden Strömungskanalstruktur bilden. Hierunter ist auch zu verstehen, dass das Einlassmittel 34 strömungstechnisch mit einem entsprechenden zweiten Strömungskanal kommuniziert. Funktional betrachtet ist ein entsprechender zweiter Strömungskanal insbesondere zum Einlass von Wasser 32 aus dem Außenraum 18 des Spulenkörpers 6 zum Wickelabschnitt 26 eingerichtet. Hieraus ergibt sich, dass ein entsprechender zweiter Strömungskanal sich typischerweise zumindest abschnittsweise außerhalb des Wickelabschnitts 26 des Spulenkörpers 6 erstreckt.

Der Spulenkörper 6 kann sonach im Bereich seiner Mantelfläche 14 mit wenigstens einem sich zumindest abschnittsweise in einer oder mehreren Richtungen, d. h. z. B. in Axialrichtung und/oder in Umfangsrichtung, erstreckenden ersten und/oder zweiten Strömungskanal ausgebildet sein. Jeder Strömungskanal kann in mehrere Strömungskanalsegmente unterteilt sein, welche sich in gleichen oder unterschiedlichen Richtungen entlang des Spulenkörpers 6 erstreckend ausgebildet sind. Unabhängig von seiner konkreten räumlichen Erstreckung kann jeder Strömungskanal z. B. durch eine entsprechende geometrische Strukturierung der Mantelfläche 14, d. h. z. B. durch eine nutartige bzw. -förmige Vertiefung in der Mantelfläche 14, ausgebildet sein.

Sofern sowohl wenigstens ein erster als auch wenigstens ein zweiter Strömungskanal vorhanden ist, können diese miteinander kommunizieren, insbesondere derart, dass ein Fluid, wie z. B. Wasser 32, von dem bzw. einem zweiten Strömungskanal in den bzw. einen ersten Strömungskanal und damit von dem Einlassmittel 34 zu dem Auslassmittel 28 strömen. Derart können jeweilige erste und zweite Strömungskanäle zu einem Zusammenwirken eingerichtet sein, dass mithilfe von eingelassenem Wasser eventuelle Luft aus dem Wickelpacket 26 zu dem Auslassmittel 28 hin verdrängt wird. Weiterhin kann derart über eine geeignete räumliche Konfiguration jeweiliger Strömungskanäle ein gezieltes Führen, d. h. insbesondere Zu- und Abführen eines Fluids, entlang der Mantelfläche 14 des Spulenkörpers 6 realisiert werden.

### Bezugszeichenliste

- 2: Flugkörper
- 4: Spule
- 6: Spulenkörper
- 8: Wickelpaket
- 10: Mittellängsachse
- 12: Lichtwellenleiter
- 14: Mantelfläche
- 16: Grenzfläche
- 18: Außenraum
- 20: Luft
- 22: Innenraum
- 24a, b: Längsende (Spulenkörper)
- 26: Wickelabschnitt
- 28: Auslassmittel
- 30: Durchbrechung
- 32: Wasser
- 34: Einlassmittel
- 36: erste Nut (Auslassmittel)
- 38a, b: Längsende (Wickelabschnitt)
- 40: zweite Nut (Einlassmittel)
- 42: Ventil

- dmin: Mindestabstand

## Patentansprüche

1. Spulenkörper (6) zum Tragen eines Wickelpakets (8) eines Lichtwellenleiters (12), wobei der Spulenkörper (6) für einen unter Wasser startbaren Flugkörper (2) bestimmt ist, wobei der Flugkörper (2) mit dem Spulenkörper (6) und dem Wickelpaket (8) dazu eingerichtet ist, sich bei einer Mission zuerst durch Wasser und anschließend durch Luft zu bewegen und ab Beginn der Mission den Lichtwellenleiter (12) hinter sich abzuwickeln, wobei
- der Spulenkörper (6) sich entlang einer Mittellängsachse (10) erstreckt und eine radial nach außen weisende Mantelfläche (14) aufweist und einen Innenraum (22) umgibt,
- ein Längsabschnitt der Mantelfläche (14) einen Wickelabschnitt (26) zur Aufbringung des Wickelpakets (8) bildet,
- die Mantelfläche (14) ein Auslassmittel (28) zum Abtransport von eventueller Luft (20) und gegebenenfalls von Wasser (32) aus dem Wickelabschnitt (26) aufweist, wobei das Auslassmittel (28) durch eine geometrische Strukturierung der Mantelfläche (14) gebildet ist,
**dadurch gekennzeichnet, dass**
das Auslassmittel (28) als geometrische Strukturierung mindestens eine in die Mantelfläche (14) eingebrachte erste Nut (36) aufweist, wobei jede der ersten Nuten (36) im Wickelabschnitt (26) zumindest eine Längskomponente aufweist.

2. Spulenkörper (6) nach Anspruch 1,
**dadurch gekennzeichnet, dass**
die Mantelfläche (14) ein Einlassmittel (34) zum Einlass von Wasser (32) aus dem Außenraum (18) des Spulenkörpers (6) zum Wickelabschnitt (26) hin aufweist, wobei Einlassmittel (34) und Auslassmittel (28) derart zu einem Zusammenwirken eingerichtet sind, dass mit Hilfe des eingelassenen Wassers (32) eventuelle Luft (20) aus dem Wickelpaket (26) zum Auslassmittel (28) hin verdrängt wird.

3. Spulenkörper (6) nach einem der vorhergehenden Ansprüche,
**dadurch gekennzeichnet, dass**
das Auslassmittel (28) zum Abtransport der Luft (20) und gegebenenfalls des Wassers (32) zum Innenraum (22) hin eingerichtet ist.

4. Spulenkörper (6) nach Anspruch 2 oder 3,
**dadurch gekennzeichnet, dass**
das Einlassmittel (34) durch eine geometrische Strukturierung der Mantelfläche (14) gebildet ist.

5. Spulenkörper (6) nach einem der vorhergehenden Ansprüche,
**dadurch gekennzeichnet, dass**
mindestens eine der ersten Nuten (36) eine Durchbrechung (30) zum Innenraum (22) hin aufweist.

6. Spulenkörper (6) nach einem der vorhergehenden Ansprüche,
**dadurch gekennzeichnet, dass**
mindestens eine der ersten Nuten (36) sich vollständig innerhalb des Wickelabschnitts (26) befindet.

7. Spulenkörper (6) nach einem der Ansprüche 4 bis 6,
**dadurch gekennzeichnet, dass**
das Einlassmittel (34) als geometrische Strukturierung mindestens eine in die Mantelfläche (14) eingebrachte zweite Nut (40) aufweist, wobei jede der zweiten Nuten (40) im Wickelabschnitt (14) zumindest eine Längskomponente aufweist.

8. Spulenkörper (6) nach Anspruch 7,
**dadurch gekennzeichnet, dass**
mindestens eine der zweiten Nuten (40) den Wickelabschnitt (26) an wenigstens einem Längsende (38a, b) überragt.

9. Spulenkörper (6) nach einem der vorhergehenden Ansprüche,
**dadurch gekennzeichnet, dass**
sich mindestens eine der ersten Nuten (36) und/oder - falls vorhanden - mindestens eine der zweiten Nuten (40) entlang einer geraden Linie erstreckt.

10. Spulenkörper (6) nach einem der Ansprüche 7 bis 9,
**dadurch gekennzeichnet, dass**
zumindest drei in Umfangsrichtung benachbarte erste (36) und zweite Nuten (40) in Umfangrichtung alternierend angeordnet sind.

11. Spulenkörper (6) nach einem der vorhergehenden Ansprüche,
**dadurch gekennzeichnet, dass**
die Mantelfläche (14) und/oder der Wickelabschnitt (26) einen runden Querschnitt aufweist.

12. Spulenkörper (6) nach einem der vorhergehenden Ansprüche,
**dadurch gekennzeichnet, dass**
der Innenraum (22) ein abgeschlossener Hohlraum ist.

13. Spulenkörper (6) nach Anspruch 12,
**dadurch gekennzeichnet, dass**
der Innenraum (22) ein Ventil (42) zur Entleerung des Hohlraumes aufweist.

14. Spulenkörper nach einem der vorhergehenden Ansprüche, **dadurch gekennzeichnet, dass** das Auslassmittel (28) einen Bestandteil einer in dem Spulenkörper (6) ausgebildeten, wenigstens einen sich zumindest abschnittsweise in einer oder mehreren Richtungen entlang der Mantelfläche (14) des Spulenkörpers (6) erstreckenden ersten Strömungskanal umfassenden Strömungskanalstruktur bildet;
und/oder
das oder ein Einlassmittel (34) einen Bestandteil einer in dem Spulenkörper (6) ausgebildeten, wenigstens einen sich zumindest abschnittsweise in einer oder mehreren Richtungen entlang der Mantelfläche (14) des Spulenkörpers (6) erstreckenden zweiten Strömungskanal umfassenden Strömungskanalstruktur bildet.

15. Spulenkörper nach Anspruch 14, **dadurch gekennzeichnet, dass** sowohl wenigstens ein erster als auch wenigstens ein zweiter Strömungskanal vorhanden ist, welche miteinander kommunizieren, insbesondere derart, dass ein Fluid, wie z. B. Wasser, von dem bzw. einem zweiten Strömungskanal in den bzw. einen ersten Strömungskanal und damit von dem Einlassmittel (34) zu dem Auslassmittel (28) strömen kann.

16. Spule (4), mit einem Spulenkörper (6) nach einem der vorhergehenden Ansprüche, und mit dem Wickelpaket (8).

## Claims

1. Bobbin (6) for supporting a wound package (8) of an optical fibre (12), wherein the bobbin (6) is destined for a missile (2) able to be launched underwater, wherein during a mission the missile (2) with the bobbin (6) and the wound package (8) is configured to first move through water and subsequently through air, and to unwind the optical fibre (12) behind it as from the beginning of the mission, wherein
- the bobbin (6) extends along a central longitudinal axis (10) and has a shell face (14) which points radially outwards and surrounds an interior (22),
- a longitudinal portion of the shell face (14) forms a winding portion (26) for applying the wound package (8),
- the shell face (14) has an outlet means (28) for discharging potential air (20) and optionally water (32) from the winding portion (26), wherein the outlet means (28) is formed by geometrical structuring of the shell face (14),
**characterized in that**
the outlet means (28) as geometrical structuring has at least one first groove (36) incorporated into the shell face (14), wherein each of the first grooves (36) in the winding portion (26) has at least one longitudinal component.

2. Bobbin (6) according to Claim 1,
**characterized in that**
the shell face (14) has an inlet means (34) for admitting water (32) from the exterior (18) of the bobbin (6) towards the winding portion (26), wherein inlet means (34) and outlet means (28) are configured to interact in such a manner that, with the aid of the admitted water (32), potential air (20) is displaced from the wound package (26) towards the outlet means (28).

3. Bobbin (6) according to one of the preceding claims,
**characterized in that**
the outlet means (28) is configured to discharge the air (20) and optionally the water (32) towards the interior (22).

4. Bobbin (6) according to Claim 2 or 3,
**characterized in that**
the inlet means (34) is formed by geometrical structuring of the shell face (14).

5. Bobbin (6) according to one of the preceding claims,
**characterized in that**
at least one of the first grooves (36) has a cut-out (30) towards the interior (22).

6. Bobbin (6) according to one of the preceding claims,
**characterized in that**
at least one of the first groove (36) is located completely within the winding portion (26).

7. Bobbin(6) according to one of Claims 4 to 6,
**characterized in that**
the inlet means (34) as geometrical structuring has at least one second groove (40) incorporated into the shell face (14), wherein each of the second grooves (40) in the winding portion (14) has at least one longitudinal component.

8. Bobbin (6) according to Claim 7,
**characterized in that**
at least one of the second grooves (40) protrudes beyond the winding portion (26) on at least one longitudinal end (38a, b).

9. Bobbin (6) according to one of the preceding claims,
**characterized in that**
at least one of the first grooves (36) and/or - if present - at least one of the second grooves (40) extend(s) along a straight line.

10. Bobbin (6) according to one of Claims 7 to 9,
**characterized in that**
at least three first (36) and second grooves (40) which are adjacent in the circumferential direction are disposed so as to alternate in the circumferential direction.

11. Bobbin (6) according to one of the preceding claims,
**characterized in that**
the shell face (14) and/or the winding portion (26) have/has a round cross section.

12. Bobbin (6) according to one of the preceding claims,
**characterized in that**
the interior (22) is a closed-off cavity.

13. Bobbin (6) according to Claim 12,
**characterized in that**
the interior (22) has a valve (42) for bleeding the cavity.

14. Bobbin according to one of the preceding claims, **characterized in that** the outlet means (28) forms a constituent part of a flow duct structure which is formed in the bobbin (6) and comprises at least one first flow duct extending at least in portions in one or a plurality of directions along the shell face (14) of the bobbin (6); and/or
the or an inlet means (34) forms a constituent part of a flow duct structure which is formed in the bobbin (6) and comprises at least one second flow duct extending at least in portions in one or a plurality of directions along the shell face (14) of the bobbin (6).

15. Bobbin according to Claim 14, **characterized in that** there is at least one first as well as at least one second flow duct which communicate with one another in particular in such a manner that a fluid, such as water, can flow from the, or a, second flow duct into the, or a, first flow duct, and thus from the inlet means (34) to the outlet means (28).

16. Package (4) having a bobbin (6) according to one of the preceding claims, and having the wound package (8).

## Revendications

1. Corps de bobine (6) pour supporter un paquet d'enroulement (8) d'une fibre optique (12), le corps de bobine (6) étant destiné à un projectile pouvant être lancé sous l'eau (2), le projectile (2) étant configuré, avec le corps de bobine (6) et le paquet d'enroulement (8), pour se déplacer d'abord dans l'eau puis dans l'air lors d'une mission et pour dévider la fibre optique (12) derrière lui dès le début de la mission, dans lequel
- le corps de bobine (6) s'étend le long d'un axe longitudinal médian (10) et présente une surface d'enveloppe (14) orientée radialement vers l'extérieur et entoure un espace intérieur (22),
- une partie longitudinale de la surface d'enveloppe (14) forme une partie d'enroulement (26) pour l'application du paquet d'enroulement (8),
- la surface d'enveloppe (14) présente un moyen de sortie (28) pour l'évacuation d'air éventuellement présent (20) et, le cas échéant, d'eau (32) de la partie d'enroulement (26), le moyen de sortie (28) étant formé par une structuration géométrique de la surface d'enveloppe (14),
**caractérisé en ce que**
le moyen de sortie (28), en tant que structuration géométrique, présente au moins une première rainure (36) ménagée dans la surface d'enveloppe (14), chacune des premières rainures (36) présentant au moins une composante longitudinale dans la partie d'enroulement (26).

2. Corps de bobine (6) selon la revendication 1,
**caractérisé en ce que**
la surface d'enveloppe (14) comporte un moyen d'entrée (34) pour l'entrée d'eau (32) depuis l'espace extérieur (18) du corps de bobine (6) vers la partie d'enroulement (26), le moyen d'entrée (34) et le moyen de sortie (28) étant configurés pour interagir de manière à ce que, à l'aide de l'eau introduite (32), l'air éventuellement présent (20) soit évacué du paquet d'enroulement (26) vers le moyen de sortie (28).

3. Corps de bobine (6) selon l'une des revendications précédentes,
**caractérisé en ce que**
le moyen de sortie (28) est conçu pour l'évacuation de l'air (20) et, le cas échéant, de l'eau (32) vers l'espace intérieur (22).

4. Corps de bobine (6) selon la revendication 2 ou 3,
**caractérisé en ce que**
le moyen d'entrée (34) est formé par une structuration géométrique de la surface d'enveloppe (14).

5. Corps de bobine (6) selon l'une des revendications précédentes,
**caractérisé en ce que**
au moins l'une des premières rainures (36) présente une ouverture (30) donnant sur l'espace intérieur (22).

6. Corps de bobine (6) selon l'une des revendications précédentes,
**caractérisé en ce que**
au moins l'une des premières rainures (36) se trouve entièrement à l'intérieur de la partie d'enroulement (26).

7. Corps de bobine (6) selon l'une des revendications 4 à 6,
**caractérisé en ce que**
le moyen d'entrée (34), en tant que structuration géométrique, présente au moins une deuxième rainure (40) ménagée dans la surface d'enveloppe (14), chacune des deuxièmes rainures (40) présentant au moins une composante longitudinale dans la partie d'enroulement (14).

8. Corps de bobine (6) selon la revendication 7,
**caractérisé en ce que**
au moins l'une des deuxièmes rainures (40) fait saillie par rapport à la partie d'enroulement (26) à au moins une extrémité longitudinale (38a, b).

9. Corps de bobine (6) selon l'une des revendications précédentes,
**caractérisé en ce que**
au moins l'une des premières rainures (36) et/ou, si elles sont présentes, au moins l'une des deuxièmes rainures (40) s'étend le long d'une ligne droite.

10. Corps de bobine (6) selon l'une des revendications 7 à 9,
**caractérisé en ce que**
au moins trois premières (36) et deuxièmes rainures (40) adjacentes dans la direction circonférentielle sont agencées en alternance dans la direction circonférentielle.

11. Corps de bobine (6) selon l'une des revendications précédentes,
**caractérisé en ce que**
la surface d'enveloppe (14) et/ou la partie d'enroulement (26) présente un profil transversal rond.

12. Corps de bobine (6) selon l'une des revendications précédentes,
**caractérisé en ce que**
l'espace intérieur (22) est une cavité fermée.

13. Corps de bobine (6) selon la revendication 12,
**caractérisé en ce que**
l'espace intérieur (22) comporte une soupape (42) permettant de vider la cavité.

14. Corps de bobine selon l'une des revendications précédentes, **caractérisé en ce que** le moyen de sortie (28) forme un composant d'une structure de canal d'écoulement formée dans le corps de bobine (6), comprenant au moins un premier canal d'écoulement s'étendant au moins par parties dans une ou plusieurs directions le long de la surface d'enveloppe (14) du corps de bobine (6) ; et/ou
le ou un moyen d'entrée (34) forme un composant d'une structure de canal d'écoulement formée dans le corps de bobine (6), comprenant au moins un deuxième canal d'écoulement s'étendant au moins par parties dans une ou plusieurs directions le long de la surface d'enveloppe (14) du corps de bobine (6).

15. Corps de bobine selon la revendication 14, **caractérisé en ce que** sont présents à la fois au moins un premier et au moins un deuxième canal d'écoulement, qui communiquent l'un avec l'autre, notamment de manière à ce qu'un fluide, tel que de l'eau, puisse s'écouler depuis le ou un deuxième canal d'écoulement vers le ou un premier canal d'écoulement, et ainsi depuis le moyen d'entrée (34) vers le moyen de sortie (28).

16. Bobine (4), comprenant un corps de bobine (6) selon l'une des revendications précédentes, et comprenant le paquet d'enroulement (8).
